# EUROPEAN PATENT APPLICATION

(11) **EP 4 570 541 A1**
(43) Date of publication of application: **18.06.2025**
(21) Application number: 24218147.7
(22) Date of filing: 06.12.2024
(51) Int. Cl.: B60J 1/00

(54) **WINDOW STRUCTURE OF A VEHICLE**

(30) Priority: 15.12.2023 JP 2023211834
(71) Applicant: MAZDA MOTOR CORPORATION, Hiroshima 730-8670 (JP)
(72) Inventor: Nakagawa, Kohya, Hiroshima 730-8670 (JP); Yamamoto, Kenichi, Hiroshima 730-8670 (JP); Miyoshi, Yuji, Hiroshima 730-8670 (JP); Asakawa, Motoyasu, Aki-gun, Hiroshima 730-8670 (JP); Nagatomo, Hiroyuki, Aki-gun, Hiroshima 730-8670 (JP)
(74) Representative: Herrmann, Uwe

(57) **Abstract**

A window structure comprises a window member (3) covering an opening portion (2a) of a window frame member (2) and piled on a peripheral edge portion (2b) of the window frame member (2), a vibration-reduction adhesive (5) having a storage modulus of 10 MPa - 17 MPa and applied to at least part of the peripheral edge portion (2b) along the peripheral edge portion (2b) so as to adhere the window member (3) to the peripheral edge portion (2b), and a partitioning section (10) to partition at least part of the vibration-reduction adhesive (5) in a longitudinal direction, which corresponds to an application direction of the vibration-reduction adhesive.

## Description

### BACKGROUND OF THE INVENTION

The present invention relates to a window structure of a vehicle.

Conventionally, there may occur the membrane (film) vibration of a windshield of the vehicle which is caused by the vehicle traveling's vibrations transmitted to the windshield from a vehicle lower part. This membrane (film) vibration of the windshield possibly generates improper noises or vibrations, which may cause deterioration of the comfortability of a passenger in a cabin. Therefore, in recent years, various technologies have been proposed in order to reduce the membrane (film) vibration of the windshield from an improvement perspective of the comfortability.

In a structure disclosed in JP 2009-012604 A, two lines of adhesive portions to adhere a windshield to a frame body are applied to a lower-side part of a windshield provided at a vehicle front side such that they extend in a vehicle width direction side by side. The two-line adhesive portions so increase the rigidity of the lower-side part of the windshield compared to another part of the windshield that the windshield' membrane (film) vibration generated in a certain frequency range in the vehicle traveling can be suppressed from occurring. Thereby, the NVH performance (regarding noises, vibrations, harshness) of the vehicle can be improved.

In the above-described structure, however, by changing a resonant frequency of the windshield in a particular frequency range of the vibrations, which the windshield receives by means of the increased rigidity of the lower part of the windshield, the vibration level of the particular frequency range is decreased. Therefore, since another resonance may occur in a different frequency range when the frequency of the inputted vibration changes from the above-described particular frequency, there is a concern that the effects of reducing the vibrations may not be obtained properly.

Meanwhile, a technology that an adhesive to improve the vibration characteristics is replaced by a vibration-reduction adhesive having the superior vibration-reduction performance is known. However, there is room for improvement in this technology in terms of securing the support rigidity of the windshield by means of the vibration-reduction adhesive. Further, since this vibration-reduction adhesive is generally rather expensive compared to the normal adhesive for the windshield, the above-described technology has a problem in costs as well.

### SUMMARY OF THE INVENTION

The present invention has been devised in view of the above-described matters, and an object of the present invention is to provide a window structure of a vehicle, which can properly improve the vibration-reduction effects, securing the support rigidity of a window member (windshield) by means of the vibration-reduction adhesive.

The window structure of the vehicle of the present invention comprises a window frame member having an opening portion penetrating in a vehicle longitudinal direction and a peripheral edge portion enclosing the opening portion and provided at a front part of the vehicle, a window member covering the opening portion and piled on the peripheral edge portion of the window frame member, the window member being transparent or translucent, a vibration-reduction adhesive having a storage modulus of 10 - 17MPa and applied to at least part of the peripheral edge portion of the window frame member along the peripheral edge portion so as to adhere the window member to the peripheral edge portion of the window frame member, and a partitioning section to partition at least part of the vibration-reduction adhesive in a longitudinal direction which corresponds to an application direction of the vibration-reduction adhesive.

In the above-described structure, there is the partitioning section to partition at least part of the vibration-reduction adhesive having the storage modulus of 10 - 17MPa in the longitudinal direction. Since it comes into a layer of the vibration-reduction adhesive by partitioning the vibration-reduction adhesive, the partitioning section serves as a deformation resistance to suppress deformation of the vibration-reduction adhesive (in other words, as a reinforcing member to reinforce the vibration-reduction adhesive), so that the support rigidity of the window member (windshield) by means of the vibration-reduction adhesive can be secured. Additionally, by means of the partitioning section partitioning the vibration-reduction adhesive, the recovery rate of the rigidity of the vibration-reduction adhesive for the application direction of the vibration-reduction adhesive, i.e., the longitudinal direction, can be improved, that is - a sharing ratio of the strain energy of the vibration-reduction adhesive can be improved. Accordingly, the vibration-reduction effects can be improved without increasing an application amount of the vibration-reduction adhesive.

In the above-described window structure of the vehicle, it is preferable that the partitioning section extends in a direction, which crosses the above-described longitudinal direction.

According to this structure, the vibration-reduction effects for the vibrations which are inputted to the vibration-reduction adhesive in the longitudinal direction or the torsional direction can be improved.

In the above-described window structure of the vehicle, it is preferable that the partitioning section extends toward a center of the window member.

According to this structure, the vibration-reduction effects can be improved with a simple structure.

In the above-described window structure of the vehicle, it is preferable that the partitioning section is constituted by plural sections, which are positioned adjacently and extend in different directions.

According to this structure, the rigidity of the adhesive for any direction of the shearing can be improved, so that the vibration-reduction effects can be improved.

In the above-described window structure of the vehicle, it is preferable that the plural partitioning sections extend in an inverted-V shape.

According to this structure, the rigidity of the adhesive for any direction of the shearing can be improved, so that the vibration-reduction effects can be improved.

In the above-described window structure of the vehicle, it is preferable that the vibration-reduction adhesive is applied to a pair of lower corner portions of the peripheral edge portion and/or a portion of the peripheral edge portion which interconnects the pair of lower corner portions, and the partitioning section is provided in an area where the vibration-reduction adhesive is applied.

According to this structure, the vibration-reduction adhesive is applied to a portion of the peripheral edge portion of the window frame member which contributes to reducing the vibrations transmitted from the vehicle lower part, i.e., at the pair of lower corner portions of the peripheral edge portion and/or the portion of the peripheral edge portion which interconnects the pair of lower corner portions. Further, the partitioning section is provided in the area where the vibration-reduction adhesive is applied. According to the above-described arrangement of the vibration-reduction adhesive and the partitioning section, the vibration-reduction effects can be improved effectively.

In the above-described window structure of the vehicle, the partitioning section may have a bead, which is provided at the window frame member and extends in a cross direction perpendicular to the longitudinal direction.

According to this structure, since the bead provided at the window frame member as the partitioning section extends in the cross direction perpendicular to the longitudinal direction, the bead does not hinder the deformation of the window frame member when the vehicle collides with a pedestrian, especially in a vehicle side collision. Thereby, since the deformation of the window frame portion is allowed even if the partitioning section is provided at the window frame member, the vibration-reduction effects can be obtained without hindering the pedestrian protection.

In the above-described window structure of the vehicle, it is preferable that the partitioning section further has a sub bead, which is connected to the bead and extends in the longitudinal direction.

According to this structure, the rigidity of the adhesive for any direction of the shearing can be further improved.

In the above-described window structure of the vehicle, the partitioning section may have a rib, which is provided at the window member and extends in a cross direction perpendicular to the longitudinal direction.

According to this structure, since the rib provided at the window member as the partitioning section extends in the cross direction perpendicular to the longitudinal direction, the vibration-reduction effects for the vibrations which are inputted to the vibration-reduction adhesive in the longitudinal direction or the torsional direction can be improved. Moreover, since the partitioning section is provided at the window member, an existing window frame member with no rib is appliable.

In the above-described window structure of the vehicle, it is preferable that the partitioning section further has a sub rib, which is connected to the rib and extends in the longitudinal direction.

According to this structure, the rigidity of the adhesive for any direction of the shearing can be further improved.

As described above, the window structure of the vehicle of the present invention can properly improve the vibration-reduction effects, securing the support rigidity of the window member (windshield) by means of the vibration-reduction adhesive.

The present invention will become apparent from the following description, which refers to the accompanying drawings.

### BRIEF DESCRIPTION OF THE DRAWINGS

FIG. 1 is an elevational view showing a window frame member and its surrounding area, which shows an entire structure of a window structure of a vehicle according to a first embodiment of the present invention.
FIG. 2 is an enlarged view of a first portion including a corner portion positioned at a lower left side of a peripheral edge portion of FIG. 1 and its surrounding area.
FIG. 3 is a perspective explanatory diagram schematically showing a state where beads as a partitioning section provided at a cowl portion of the window frame member of FIG. 1 partition a vibration-reduction adhesive.
FIG. 4 is a perspective explanatory diagram showing plural inverted-V shaped beads, which extend in an inverted-V shape with a standard at a center, in a vehicle width direction, of the cowl portion shown in FIG. 1.
FIG. 5 is a sectional explanatory view showing the state where the beads provided at the cowl portion of the window frame member of FIG. 1 partitions the vibration-reduction adhesive.
FIG. 6 is a graph showing a recover rate of rigidity by the bead in respective cases where the vibration-reduction adhesive is pulled in X, Y, XY (oblique), and Z (vertical) directions in a structure in which the bead extends in a cross direction, i.e., in the X direction, which is perpendicular to the Y direction, and partitions the vibration-reduction adhesive, wherein an application direction of the vibration-reduction adhesive, i.e., a longitudinal direction, is defined as the Y direction.
FIG. 7 is a perspective explanatory diagram showing plural parallel beads which are configured to extend in parallel as a modified example of the first embodiment.
FIG. 8 is a graph showing a vibration-reduction amount caused by the vibration-reduction effects of the vibration-reduction adhesive when vibrations of 100 - 160Hz are applied to a front windshield in respective cases of an original with no bead, the parallel beads shown in FIG. 7, and the inverted-V shaped beads shown in FIG. 4.
FIG. 9 is a perspective explanatory diagram showing the cowl portion provided with a partitioning section having both a main bead extending in the cross direction as the modified example of the first embodiment and a sub bead extending in the longitudinal direction.
FIG. 10 is a graph showing a relationship between a storage modulus of the adhesive and a strain-energy sharing ratio of the adhesive in respective cases of the original with no bead, the parallel beads shown in FIG. 7, and the main bead plus sub bead shown in FIG. 9.
FIG. 11 is a three-dimensional map showing a displacement amount (vibration mode) caused by the membrane (film) vibration of a front windshield of FIG. 1 and a top ceiling.
FIG. 12 is a graph showing a changing amount of sound for a base (standard) in respective cases where the adhesive applied to the respective portions of the peripheral edge portion of FIG. 1 is constituted by the one having the high vibration-reduction performance and constituted by the one having the high rigidity performance.
FIG. 13 is a graph showing a changing amount of vibration for a base (standard) in respective cases where the adhesive applied to the respective portions of the peripheral edge portion of FIG. 1 is constituted by the one having the high vibration-reduction performance and constituted by the one having the high rigidity performance.
FIG. 14 is a chart showing test results of the vibration reduction for the base (standard) in the respective cases where the adhesive applied to the respective portions of the peripheral edge portion of FIG. 1 is constituted by the one having the high vibration-reduction performance and constituted by the one having the high rigidity performance.
FIG. 15 is an exploded perspective explanatory diagram showing a partitioning section according to a second embodiment of the present invention, in which plural ribs are provided at a lower portion of a cabin-side face of the front windshield.
FIG. 16 is a sectional explanatory diagram showing a state where the plural ribs of FIG. 15 partition the vibration-reduction adhesive.

### DETAILED DESCRIPTION OF THE INVENTION

### (First Embodiment)

Hereafter, a window structure of a vehicle according to a first embodiment of the present invention will be described specifically referring to the drawings.

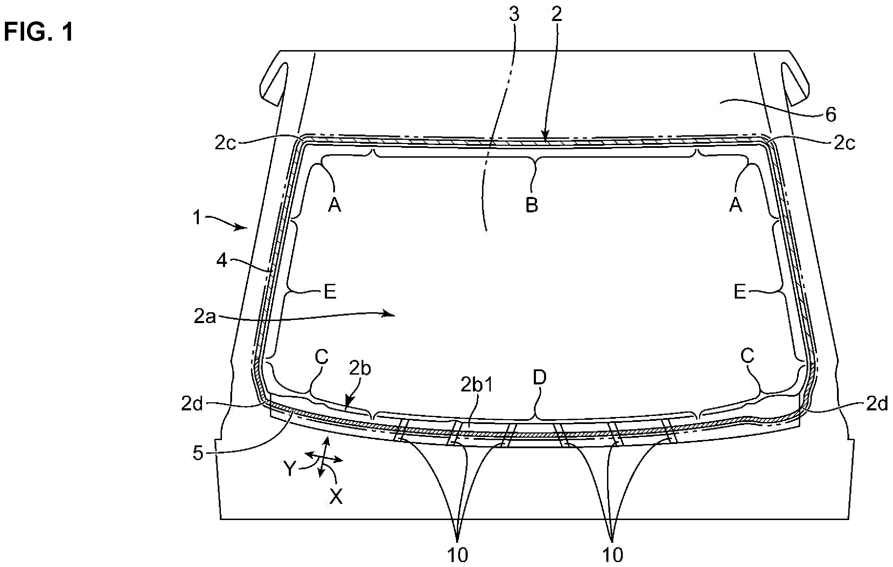

As shown in FIG. 1, a vehicle body 1 to which the window structure of the vehicle according to the first embodiment of the present invention is applied comprises a window frame member 2 provided at a front part of the vehicle, a front windshield 3 (hereafter, referred to as the windshield 3) as a window member attached to the window frame member 2, two kinds of adhesives to adhere the windshield 3 to the window frame member 2, i.e., a normal adhesive 4 for an automobile glass and a vibration-reduction adhesive 5, and plural beads 10 as a partitioning section to partition the vibration-reduction adhesive 5. Herein, reference character 6 denotes a top ceiling as a top plate, which extends vehicle rearward continuously from the window frame member 2 and covers over an upper face of the vehicle body 1.

The window frame member 2 comprises a roughly rectangular-shaped opening portion 2a which penetrates the window frame member 2 in a vehicle longitudinal direction and a roughly rectangular-shaped peripheral edge portion 2b which is provided to enclose a periphery of the opening portion 2a. The peripheral edge portion 2b includes a cowl portion 2b1 which constitutes a lower side portion thereof.

The peripheral edge portion 2b comprises a pair of right-and-left corner portions 2d (lower corner portions 2d) which are positioned at a lower side and at the both sides, in a vehicle width direction, of the peripheral edge portion 2b and a pair of corner portions 2c (upper corner portions 2c), which are positioned at an upper side and at the both sides, in the vehicle width direction, of the peripheral edge portion 2b.

More specifically, the peripheral edge portion 2b comprises a pair of upper corner portions (parts) A which include the pair of upper corner portions 2c, an upper side portion (part) B which is positioned between the pair of upper corner portions (parts) A, a pair of first portions (parts) C, which correspond to the pair of lower corner portions, a second portion (part) D which is positioned between the pair of first portions (parts) C as a portion corresponding to the lower side portion, and a pair of side portions (parts) E which are positioned at the both sides, in the vehicle width direction, thereof.

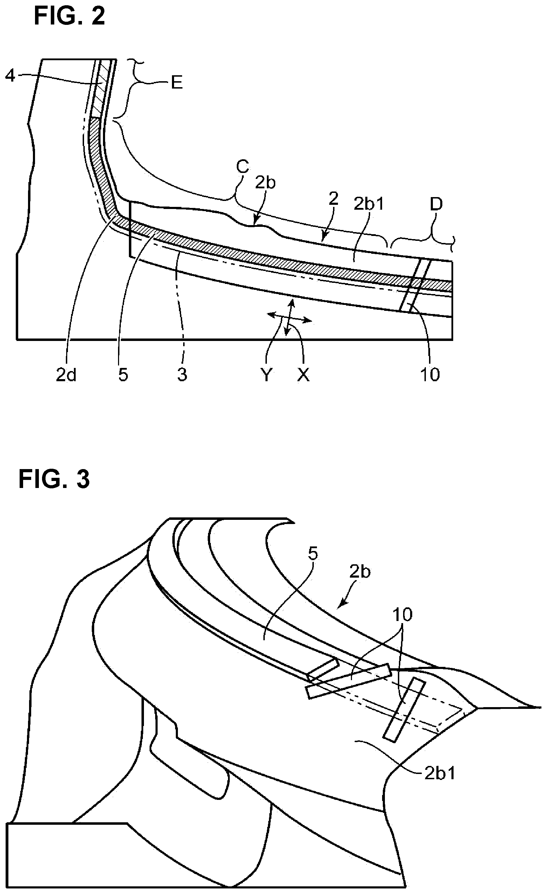

As shown in FIG. 2, each of the pair of first portions C (lower corner portions) specifically includes the corner portion 2d and a portion continuous from the corner portion 2d, and also specifically includes the corner portion 2d and a portion extending upward from the corner portion 2d and a portion extending toward a central side, in the vehicle width direction, thereof. Further, in a case where the corner portion 2d has curvature, it can be said that the first portion C includes a portion, which extends from a bending-starting point of the corner portion 2d to a bending-ending point of the corner portion 2d. The above-described respective portions extending toward the central side, in the vehicle width direction, of the pair of first portions C and the above-described second portion D are included in the cowl portion 2b 1 of the peripheral edge portion 2b.

The second portion D (lower side portion) is, as shown in FIG. 1, positioned between the pair of first portions C, and specifically between both portions, which extend toward a central side, in the vehicle width direction, of the window frame member 2 from the respective first portions C.

The windshield 3 is a roughly rectangular-shaped window member, which is provided to cover over the opening portion 2a and overlap the peripheral edge portion 2b, which is configured to be transparent or translucent.

The adhesive is applied to the periphery of the peripheral edge portion 2b, and adheres the front windshield 3 to the peripheral edge portion 2b of the window frame member 2. Specifically, the adhesive comprises the normal adhesive 4 for the automobile glass and the vibration-reduction adhesive 5, which has a greater loss coefficient than the normal adhesive 4. The vibration-reduction adhesive 5 is a so-called high vibration-reduction adhesive, which is a viscoelasticity having a storage modulus of 10 - 17MPa. Herein, this value of the storage modulus is the one at 20°C, 100Hz.

The vibration-reduction adhesive 5 has the loss coefficient, which is 1.5 times or more as much as that of the normal adhesive 4. The normal adhesive 4 is cheaper than the vibration-reduction adhesive 5 having the greater loss coefficient.

The vibration-reduction adhesive 5 adheres the front windshield 3 to the window frame member 2 at the pair of first portions C and/or the second portion D of the peripheral edge portion 2b.

In the present embodiment, the vibration-reduction adhesive 5 is applied to both the pair of first portions C and the second portion D. Herein, the vibration-reduction adhesive 5 may be applied only to either one of the pair of first portions C and the second portion D.

The normal adhesive 4 adheres the front windshield 3 to the window frame member 2 at the portion except the above-described portion where the front windshield 3 is adhered to the window frame member 2 by the vibration-reduction adhesive 5.

In the present embodiment, the normal adhesive 4 is applied to the portion except the pair of first portions C (lower corner portions) and the second portion D (lower side portion), i.e., the pair of upper corner portions A, the upper side portion B, and the pair of side portions E.

In the present embodiment, the normal adhesive 4 and the vibration-reduction adhesive 5 are applied such that an end portion of an application area of the normal adhesive 4 and an end portion of an application area of the vibration-reduction adhesive 5 are continuous to each other at their end faces. Accordingly, the respective application areas of the normal adhesive 4 and the vibration-reduction adhesive 5 become continuous, thereby securing the sealing performance.

### (Description of Beads 10)

As shown in FIG. 1, the beads 10 as the partitioning section are arranged in an area where the vibration-reduction adhesive 5 is applied, i.e., at the cowl portion 2b 1 of the peripheral edge portion 2b of the window frame member 2. In other words, the beads 10 are provided at both the portions of the pair of first portions C which extend toward the central side, in the vehicle width direction, of the peripheral edge portion 2b and the second portion D.

The beads 10 are, as shown in FIGS. 1-5, configured to partition at least part of the vibration-reduction adhesive 5 in a longitudinal direction Y, which is an application direction of the vibration-reduction adhesive 5.

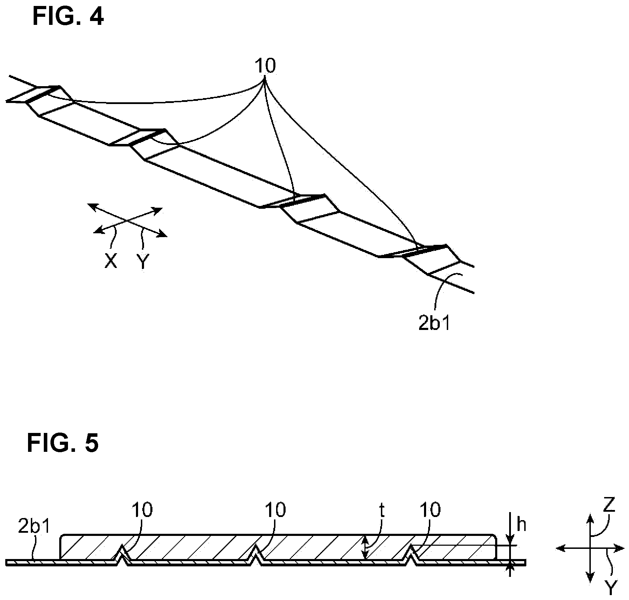

In the present embodiment, the plural beads 10 are provided to extend in an inverted-V shape in part of an area of the peripheral edge portion 2b of the window frame member 2 where the vibration-reduction adhesive 5 is applied, i.e., at the cowl portion 2b1 of the peripheral edge portion 2b. Specifically, as shown in FIGS. 1 and 4, the plural beads 10 extend in the inverted-V shape with the inverted V spreading out in the vehicle width direction. Thus, the plural beads 10 are of the so-called inverted-V shape. Herein, a single bead 10 may be provided.

The plural inverted-V shaped beads 10 extend in the direction crossing the longitudinal direction Y, respectively. In other words, the plural beads 10 extend radially toward the center of the windshield 3. Preferably, the beads extend in the direction of a vehicle height direction or at an acute angle to the vehicle height direction. Further, it can be said that the plural beads 10 extend such that they and their adjacent beads 10 extend in the different directions.

For example, the beads 10 may be formed by making part of the cowl portion 2b 1 protrude upward in FIG. 5 and towards the vehicle front side as long as they partition the vibration-reduction adhesive 5. The beads 10 may be formed on a surface of the cowl portion 2b 1 by using a resin, metal, or other material.

Securing the support rigidity and improving the vibration-reduction effects can be securely attained if the height h of the bead 10 shown in FIG. 5 is 50 - 100% of the thickness t of the adhesive. For example, it can be set such that the height h of the bead 10 is about 2 - 4mm in a case where the thickness t of the vibration-reduction adhesive 5 is 4mm, whereas that height h is 2.5 - 5mm in a case of the thickness t of 5mm.

### (Description of Rigidity Recovery Rate by Bead)

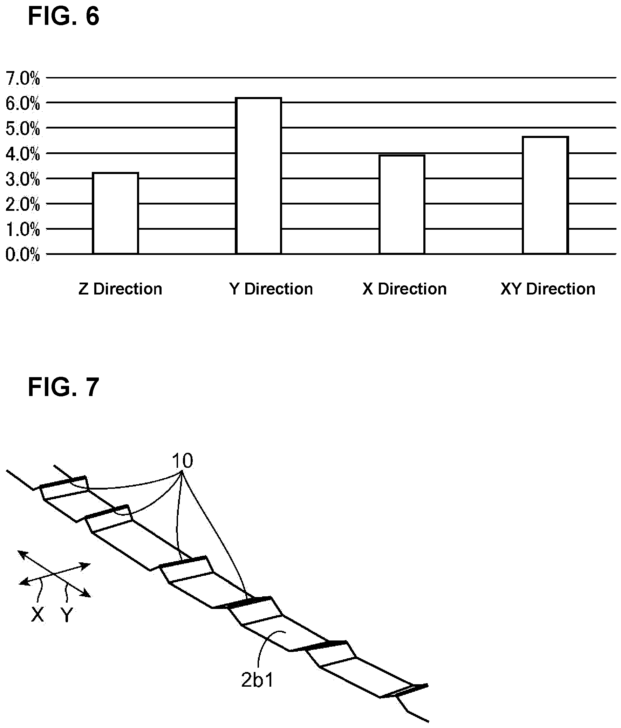

Next, the recovery rate of the rigidity of the vibration-reduction adhesive 5 by the beads 10 will be described referring to FIG. 6.

FIG. 6 is a graph showing the recovery rate of rigidity by the beads 10 in respective cases where the vibration-reduction adhesive 5 is pulled in the X, Y, XY (oblique direction which is 45-degree inclined relative to the X and Y directions), and Z (vertical) directions in a structure in which the beads 10 extend in a cross direction, i.e., in the X direction, which is perpendicular to the Y direction, and partition the vibration-reduction adhesive 5 (specifically, the parallel-bead structure shown in FIG. 7), wherein the application direction of the vibration-reduction adhesive 5, i.e., the longitudinal direction, is defined as the Y direction.

It is apparent that the rigidity recovery rate of the vibration-reduction adhesive 5 for a tension applied in the Y direction is the largest (about 6.0 %), and subsequently the one for the tension applied in the XY direction is large (about 4.5 %). It is apparent from the fact that the rigidity recovery rate of the XY direction is larger than that of the X direction that a torsional rigidity of the vibration-reduction adhesive 5 improves.

Further, the improvement of the rigidity recovery rate of 3 - 4% can be attained even in respective cases where the tension is applied in the X direction, i.e., the tension is applied in the same direction as the beads 10 extending in the X direction and the tension is applied in the Z direction, i.e., the tension is applied in a thickness direction of the vibration-reduction adhesive 5.

Accordingly, it can be recognized that the rigidity recovery rate improves for all-direction tensioning by partitioning the vibration-reduction adhesive 5 by means of the beads 10. Moreover, it is apparent that a sharing ratio of the strain energy of the vibration-reduction adhesive 5 improves as well according to the improvement of the rigidity recovery rate. Herein, the sharing ratio of the strain energy of the vibration-reduction adhesive 5 means a ratio of the strain energy that the adhesive shares relative to a gross of the strain energy caused by the rigidities relating to the adhesive and its surrounding area, i.e., three of the adhesive rigidity, the adhesive application-portion rigidity, and the windshield-surroundings rigidity.

### (Relationship between Bead Arrangenment and Vibration-Reduction Amount)

From results of the graph of FIG. 6, while it is apparent that the sharing ratio of the strain energy of the vibration-reduction adhesive 5 improves as well according to the improvement of the rigidity recovery rate by providing the beads 10, it is considered that a vibration-reduction amount caused by the vibration-reduction effects which is substantially equal to an increase amount of the sharing ratio of the strain energy increases as well.

This vibration-reduction amount is considered to change according to arrangement of the beads 10. As a modified example of the bead arrangement different from the above-described inverted-V shaped arrangement of the beads 10 shown FIG. 4, a parallel bead arrangement, that is - the plural beads 10 extend in parallel in the cross direction X perpendicular to the longitudinal direction Y, may be considered.

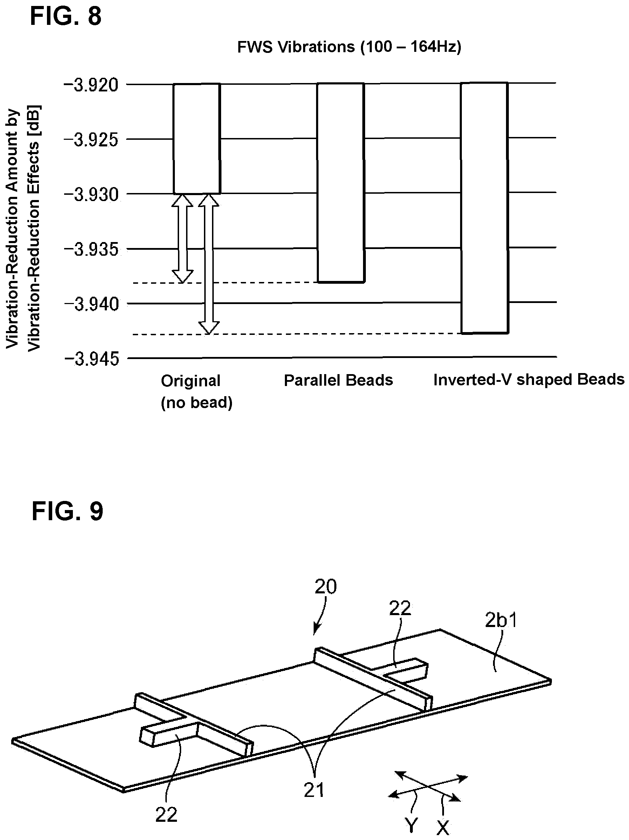

Then, as shown in the graph of FIG. 8, the vibration-reduction amount caused by the vibration-reduction effects of the vibration-reduction adhesive when vibrations of 100 - 160Hz were applied to a front windshield in the respective cases of an original with no bead, the parallel beads shown in FIG. 7, and the inverted-V shaped beads shown in FIG. 4 was examined.

It is apparent from the graph of FIG. 8 that compared to the vibration-reduction amount (-3.93dB) caused by the vibration-reduction effects in the case of the original, the vibration-reduction amount (-3.938dB) in the case of the parallel beads increases by -0.008dB, and the vibration-reduction amount (-3.943dB) in the case of the inverted-V shaped beads increases by -0.013dB. Accordingly, it is recognized that the inverted-V shaped beads generate the largest vibration-reduction amount. This is presumably because the inverted-V shaped beads reduce not only the vibration applied in the application direction (longitudinal direction Y) of the vibration-reduction adhesive 5 but the vibration applied in a direction of torsion to twist the cowl portion 2b 1.

### (Relationship between Bead Arrangement and Strain-Energy Sharing Ratio of adhesive)

It is considered that the sharing ratio of the strain energy of the vibration-reduction adhesive 5 is greatly changed by the bead arrangement. As a modified example of the bead arrangement different from the above-described parallel arrangement of the beads 10 shown FIG. 7, a combined arrangement of a main bead and a sub bead shown in FIG. 9, that is - a partitioning section 20 which has main beads 21 extending in the cross direction and sub beads 22 connected to the main beads 21 and extending in the longitudinal direction Y is provided at the cowl portion 2b1, can be considered.

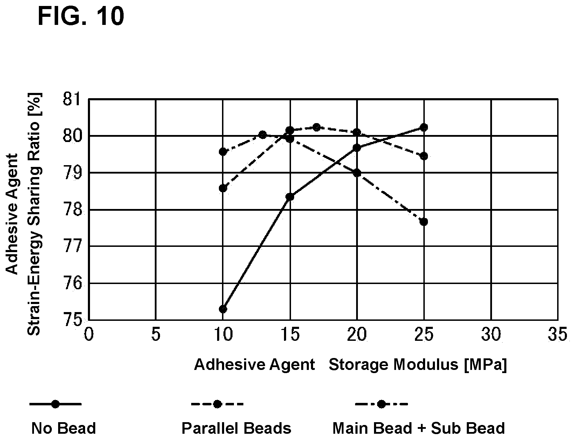

Accordingly, as shown in FIG. 10, a change of the strain-energy sharing ratio of the vibration-reduction adhesive 5 relative to the storage modulus of the vibration-reduction adhesive 5 in the respective cases of the original with no bead, the parallel beads shown in FIG. 7, and the main bead plus sub bead shown in FIG. 9 was examined.

According to the graph of FIG. 10, the strain-energy sharing ratios of the respective cases of the parallel bead and the main bead plus sub bead are higher (greater) than that of the case of original with no bead in a range of 10 - 17MPa of the storage modulus of the vibration-reduction adhesive 5. Accordingly, it is apparent that the vibration-reduction effects of the vibration-reduction adhesive 5 was improved by providing the beads.

Further, since the vibration reduction can be attained securely by providing the beads in a range of 10 - 17MPa of the storage modulus of the vibration-reduction adhesive 5, this structure is applicable to a wide variety of vehicle models.

### (Membrane (Film) Vibration)

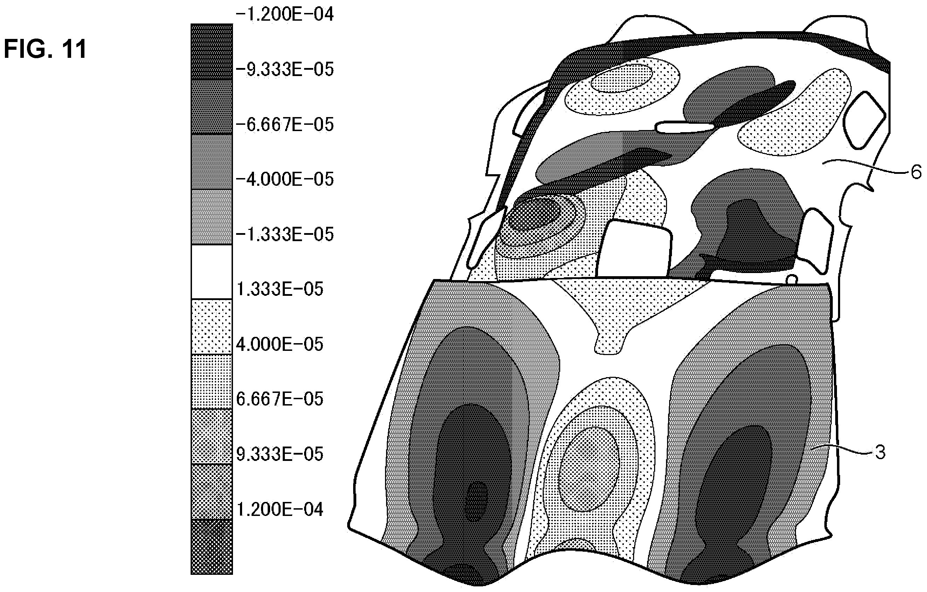

FIG. 11 shows a three-dimensional map showing a displacement amount (vibration mode) caused by the membrane (film) vibration of the front windshield 3 and the top ceiling 6 as vibration modes when the vibration of 140Hz, one example of the vibration in the vehicle traveling, is inputted. The displacement amount is indicated by the dot-density of the upper displacement amount of 1.333E-05 - 1.200E-04 and the shading of the lower displacement amount of -1.333E-05 - -1.200E-04.

It can be understood from the three-dimensional map of FIG. 11 that there occurs the membrane (film) vibration of the windshield 3 of the vehicle which is caused by the vehicle traveling's vibrations transmitted to the windshield 3 from the vehicle lower part and also the top ceiling 6 located above the windshield 3 has the membrane (film) vibration accordingly.

Especially, it is apparent from viewing the lower side of the windshield 3 that nodes are generated at the both-side lower corner portions and also an antinode of upward displacement is generated at the central portion of the lower side and a pair of antinodes of downward displacement are generated on both sides of the antinode of upward displacement.

Therefore, it can be recognized that by adhering at least one of the both-side lower corner portions where the nodes of the membrane (film) vibration of the windshield 3 are generated and the lower side portion where the antinode is generated, preferably the both portions, to the windshield 3 by the adhesive having the superior vibration-reduction effects (the so-called high vibration-reduction adhesive), the vibration-reduction effects are effectively improved by the fewer amount of high vibration-reduction adhesive.

Accordingly, since the second portion D of the lower side portion of the window frame member 2 of FIG. 1 becomes the portion where the antinode of the vibration of the windshield 3 is generated, the strain energy is accumulated at the vibration-reduction adhesive 5 by applying the vibration-reduction adhesive 5 as the high vibration-reduction adhesive. Further, since the pair of first portions C of the lower corner portions of the window frame member 2 of FIG. 1 become move-starting points (nodes) of the second portion D of the lower side portion, the strain energy is accumulated at the vibration-reduction adhesive 5 by applying the vibration-reduction adhesive 5 to the first portions C, so that the vibration-reduction effects are improved.

On the contrary, in a case where the high-rigidity adhesive is applied to the first portions C and/or the second portion D as a comparative example, it may be considered that the vibration of the second portion D increases. Further, in a case where the two-line adhesive portion is formed at the lower side portion which corresponds to the second portion D for the high rigidity, it may be considered as well that the vibration of the lower side portion (the second portion D) increases.

Next, a range for the high (superior) reduction which can effectively attain the superior reduction of the sound and vibration at the peripheral edge portion 2b of the window frame member 2 will be considered comparing to a range for the high rigidity of a comparative example.

### (Consideration of Range for High Reduction)

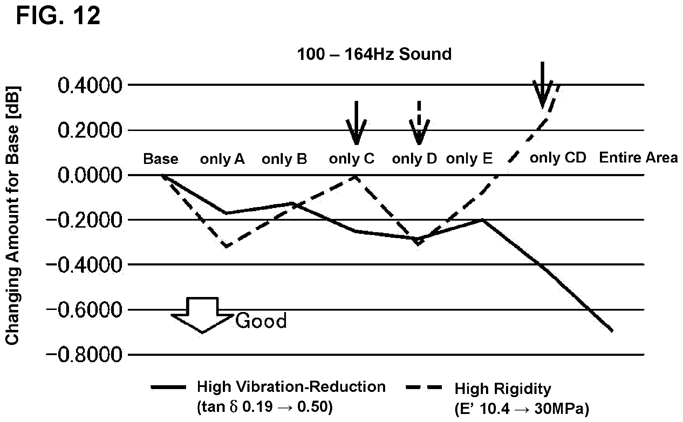

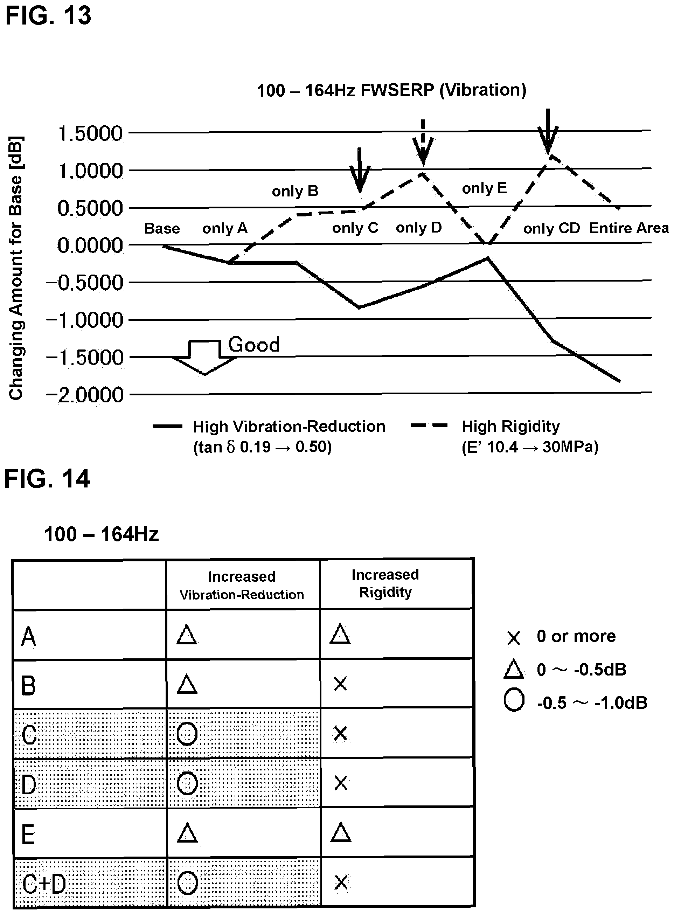

First, referring to the graphs of FIGS. 12 and 13, respective changing amounts of the sound and vibration in two cases where the adhesive applied to the respective portions A - E of the peripheral edge portion 2b is constituted by the one having the high vibration-reduction performance and constituted by the one having the high rigidity performance when the vibration (100 - 164Hz) in the vehicle traveling is applied to the windshield 3 are examined. Herein, the vibration of the windshield 3 is examined.

FIG. 12 is a graph showing the changing amount of the sound for a base (standard) (i.e., a basic adhesive without the high vibration-reduction performance nor the high rigidity performance (a normal adhesive for the automobile glass with the loss coefficient tan δ 0.19)). FIG. 13 is a graph showing the changing amount of the vibration for the base.

As shown in FIGS. 12 and 13, in the case where the adhesive applied to the respective portions A - E of the peripheral edge portion 2b is constituted by the one having the high vibration-reduction performance (the loss coefficient tan δ 0.19 → 0.50) (see the solid line-graphs of FIGS. 12 and 13), the respective changing amounts of the sound and vibration for the base decrease for the base. Further, the above-described changing amounts decrease the most in the case where the adhesive applied only to the first portion C and the second portion D is constituted by the one having the high vibration-reduction performance, and its decreasing becomes near the changing amount of the comparative example where the adhesive applied to the respective portions A - E is constituted by the one having the high vibration-reduction performance. Further, it is apparent that the changing amounts of the sound and vibration in the case where the adhesive applied only to the first portion C (see FIGS. 12 and 13) is constituted by the one having the high vibration-reduction performance decrease, and the changing amounts of the sound and vibration in the case where the adhesive applied only to the second portion D (see FIGS. 12 and 13) is constituted by the one having the high vibration-reduction performance decrease more. Particularly, it is apparent from the graph of FIG. 13 that there occurs the decrease of 0.5dB or more in the respective cases of the applications only to the first portion C, only to the second portion D, and only to the first and second portions C and D. As described above, the reduction effects of the sound and vibration can be securely obtained regardless of the frequency of the input vibration by using the adhesive having the high vibration-reduction performance.

Meanwhile, it can be understood that in the case of the comparative example where the adhesive applied to the respective portions A - E of the peripheral edge portion 2b is constituted by the one having the high rigidity performance (a storage modulus E' 10.4 → 30MPa) (see the broken-line graphs of FIGS. 12 and 13), the cases where the adhesive applied only to the first and second portions C and D (see FIGS. 12 and 13) is constituted by the one having the high rigidity performance show the largest changing amount of the sound and vibration, so that there occurs no reduction effect of the sound and vibration. Further, in the case where the adhesive applied only to the second portion D (see FIGS. 12 and 13) is constituted by the one having the high rigidity performance, the changing amount of the sound in FIG. 13 becomes small but the changing amount of the vibration in FIG. 5 becomes larger than the base, so that the vibration-reduction effect is not obtained. Moreover, in the case where the adhesive applied only to the first portion C (see FIGS. 12 and 13) is constituted by the one having the high rigidity performance, the both changing amounts of the sound and vibration in FIGS. 12 and 13 become large, so that the reduction effects of the sound and vibration are not obtained. Thus, it is apparent that the reduction effects of the sound and vibration are not obtained sufficiently by using the adhesive having the high rigidity performance.

As shown by a chart of FIG. 14, test results of the vibration reduction for the base can be obtained from the above-described changing amounts of the vibration shown by the graphs of FIG. 13 in the respective cases where the adhesive applied to the portions A - E of the peripheral edge portion 2b is constituted by the one having the high vibration-reduction performance (the increased vibration reduction in FIG. 14) and constituted by the one having the high rigidity performance (the increased rigidity in FIG. 14).

According to the chart shown in FIG. 14, it is recognized that the superior (high) vibration-reduction effects of -0.5dB or more can be obtained by the increased vibration reduction of either one of the first portion C and the second portion D or the both. Meanwhile, it is understood that in a case where the rigidity is increased for either one of the first portion C and the second portion D or the both, the changing amount becomes 0dB or more, so that the vibration increases improperly.

### (Features of First Embodiment)

(1) The above-described window structure of the vehicle of the first embodiment comprises the vibration-reduction adhesive 5 having the storage modulus of 10 - 17MPa as the adhesive to adhere the windshield 3 to the peripheral edge portion 2b of the window frame portion 2 and the plural beads 10 as the partitioning section to partition at least part of the vibration-reduction adhesive 5 in the longitudinal direction Y. Herein, the bead 10 may be constituted by a single piece alternatively.
   Since they come into a layer of the vibration-reduction adhesive 5 by partitioning the vibration-reduction adhesive 5, the beads 10 serve as a deformation resistance to suppress deformation of the vibration-reduction adhesive 5 (in other words, as a reinforcing member to reinforce the vibration-reduction adhesive 5), so that the support rigidity of the windshield 3 by means of the vibration-reduction adhesive 5 can be secured. Additionally, by means of the beads 10 partitioning the vibration-reduction adhesive 5, the recovery rate of the rigidity of the vibration-reduction adhesive 5 for the application direction of the vibration-reduction adhesive 5, i.e., the longitudinal direction Y, can be improved, that is - a sharing ratio of the strain energy of the vibration-reduction adhesive 5 can be improved. Accordingly, the vibration-reduction effects can be improved without increasing an application amount of the vibration-reduction adhesive 5.
(2) In the window structure of the first embodiment, the beads 10 extend in the direction which crosses the longitudinal direction Y. Accordingly, the vibration-reduction effects for the vibrations which are inputted to the vibration-reduction adhesive 5 in the longitudinal direction Y or the torsional direction can be improved.
(3) In the window structure of the first embodiment, the beads extend toward the center of the windshield 3 radially. According to this structure, the vibration-reduction effects can be improved with a simple structure.
(4) In the window structure of the first embodiment, the beads 10 are configured to be positioned adjacently and extend in different directions. Accordingly, the rigidity of the adhesive for any direction of the shearing can be improved, so that the vibration-reduction effects can be improved.
(5) In the window structure of the first embodiment, the beads 10 are configured to extend in the inverted-V shape. Accordingly, the rigidity of the adhesive for any direction of the shearing can be improved, so that the vibration-reduction effects can be improved.
   Herein, while the plural inverted-V shaped beads 10 shown in FIGS. 1 and 4 extend in the direction away from the center, in the vehicle width direction, of the cowl portion 2b 1 as they go away from the center of the windshield 3, the present invention is not limited to this. The plural beads 10 may be arranged side by side in the vehicle width direction such that the adjacent two beads 10 form the inverted-V shape or the V shape.
(6) In the window structure of the first embodiment, the vibration-reduction adhesive 5 is applied to the pair of first portions C which include the pair of lower corner portions 2d of the peripheral edge portion 2b and/or the second portion D of the peripheral edge portion 2d which interconnects the pair of first portions C. In the present embodiment, the vibration-reduction adhesive 5 is applied to both the pair of first portions C and the second portion D. The beads 10 are provided in the area where the vibration-reduction adhesive 5 is applied, i.e., at both the second portion D and the portions of the pair of first portions C which extend toward the center, in the vehicle width direction, of the peripheral edge portion 2b.
   According to this structure, the vibration-reduction adhesive 5 is applied to the portion of the peripheral edge portion 2b of the window frame member 2 which contributes to reducing the vibrations transmitted from the vehicle lower part, i.e., at the pair of lower corner portions of the peripheral edge portion 2b and/or the portion of the peripheral edge portion 2b which interconnects the pair of lower corner portions. Further, the beads 10 are provided in the area where the vibration-reduction adhesive 5 is applied. According to the above-described arrangement of the vibration-reduction adhesive 5 and the beads 10 as the partitioning section, the vibration-reduction effects can be improved effectively.
(7) In the window structure of the first embodiment, as shown in FIG. 7, the partitioning section may have the beads 10 which are provided at the cowl member 2b 1 of the peripheral edge portion 2b of the window frame member 22 and extend in the cross direction X perpendicular to the longitudinal direction Y.
   According to this structure, since the beads 10 provided at the window frame member 2 as the partitioning section extend in the cross direction X perpendicular to the longitudinal direction Y, the bead 10 do not hinder the deformation of the window frame member 2 when the vehicle collides with a pedestrian, especially in the vehicle side collision. Thereby, since the deformation of the window frame portion 2 is allowed even if the beads 10 as the partitioning section are provided at the window frame member 2, the vibration-reduction effects can be obtained without hindering the pedestrian protection.
(8) In the window structure of the first embodiment, as shown in FIG. 9, the partitioning section 20 further has the sub beads 22 which are connected to the main beads 21 extending in the cross direction X and extend in the longitudinal direction Y. According to this structure, the rigidity of the adhesive for any direction of the shearing can be further improved.

### (Second Embodiment)

While the beads 10 are provided at the cowl portion 2b1 which constitutes the lower side of the peripheral edge portion 2b of the window frame member 2 as the partitioning section to partition the vibration-reduction adhesive 5 in the above-described first embodiment, the present invention is not limited to this.

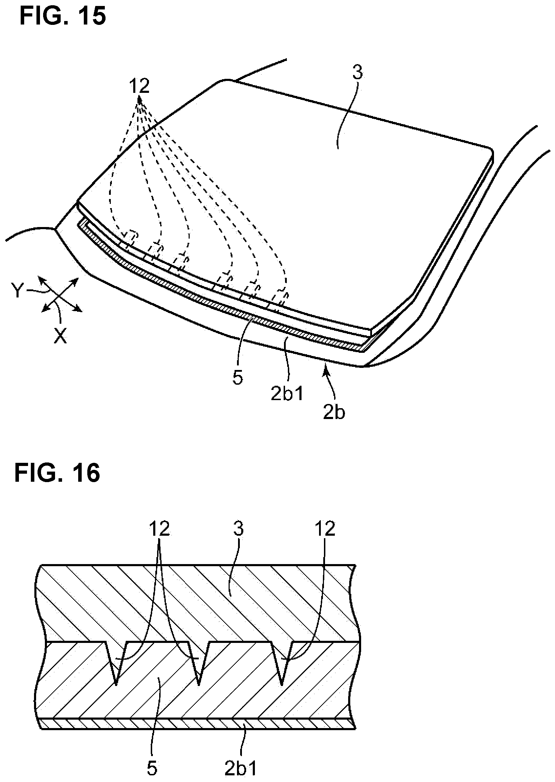

Then, in the second embodiment, as shown in FIGS. 15 and 16, the partitioning section to partition the vibration-reduction adhesive 5 have the ribs 12 which are provided at the windshield 3 and extend in the cross direction X perpendicular to the longitudinal direction Y. The ribs 12 are constituted by plural pieces, which are provided to be separated from each other in the vehicle width direction neat at a lower side of a back face of the windshield 3.

According to this structure, since the ribs 12 provided at the windshield 3 as the partitioning section extend in the cross direction X perpendicular to the longitudinal direction Y, the vibration-reduction effects for the vibrations which are inputted to the vibration-reduction adhesive 5 in the longitudinal direction Y or the torsional direction can be improved. Moreover, since the partitioning section is provided at the windshield 3, the existing window frame member 2 with no rib is appliable.

Further, similarly to the first embodiment, the partitioning section may further have sub ribs which are connected to the main ribs 12 shown in FIG. 15 and extend in the longitudinal direction Y like the partitioning section 20 having the main beads 21 and the sub beads 22 which are shown in FIG. 9. According to this structure, the rigidity of the adhesive for any direction of the shearing can be further improved.

## Claims

1. A window structure of a vehicle, comprising:
a window frame member (2) having an opening portion (2a) penetrating in a vehicle longitudinal direction and a peripheral edge portion (2b) enclosing the opening portion (2a) and provided at a front part of the vehicle;
a window member (3) covering the opening portion (2a) and piled on the peripheral edge portion (2b) of the window frame member (2), the window member (3) being transparent or translucent;
a vibration-reduction adhesive (5) having a storage modulus of 10 MPa - 17 MPa and applied to at least part of the peripheral edge portion (2b) of the window frame member (2) along the peripheral edge portion (2b) so as to adhere the window member (3) to the peripheral edge portion (2b) of the window frame member (2); and
a partitioning section (10) to partition at least part of the vibration-reduction adhesive (5) in a longitudinal direction which corresponds to an application direction of the vibration-reduction adhesive (5).

2. The window structure of the vehicle of claim 1, wherein the partitioning section (10) extends in a direction, which crosses the longitudinal direction.

3. The window structure of the vehicle of claim 1 or 2, wherein the partitioning section (10) extends toward a center of the window member (3).

4. The window structure of the vehicle of claim 1 or 2, wherein the partitioning section (20) has a bead (21) which is provided at the window frame member (2) and extends in a cross direction perpendicular to the longitudinal direction.

5. The window structure of the vehicle of claim 1 or 2, wherein the partitioning section (10) has a rib (12) which is provided at the window member and extends in a cross direction perpendicular to the longitudinal direction.

6. The window structure of the vehicle of claim 4, wherein the partitioning section (20) further has a sub bead (22) which is connected to the bead (21) and extends in the longitudinal direction.

7. The window structure of the vehicle of claim 5, wherein the partitioning section (10) further has a sub rib, which is connected to the rib (12) and extends in the longitudinal direction.

8. The window structure of the vehicle according to any one of claims 1 to 3,
wherein the partitioning section (10) is constituted by plural sections, which are positioned adjacently and extend in different directions.

9. The window structure of the vehicle of claim 9, wherein the plural partitioning sections (10) extend in an inverted-V shape.

10. The window structure of the vehicle according to any of the preceding claims, wherein the vibration-reduction adhesive (5) is applied to a pair of lower corner portions (2d) of the peripheral edge portion (2b) and/or a portion of the peripheral edge portion (2b) which interconnects the pair of lower corner portions (2d), and the partitioning section (10, 20) is provided in an area where the vibration-reduction adhesive (5) is applied.

11. The window structure of the vehicle according to any of the preceding claims, wherein a normal adhesive (4) for automobile glass adheres the front window member (3) to the window frame member (2) at portions where the vibration-reduction adhesive (5) is not applied, wherein the vibration-reduction adhesive (5) has a greater loss coefficient than the normal adhesive agent (4).

12. The window structure of the vehicle of claim 11, wherein the loss coefficient of the vibration-reduction adhesive (5) is 1.5 times or more of the loss coefficient of the normal adhesive (4).

13. The window structure of the vehicle according to any of the preceding claims, wherein a height (h) of the partitioning sections (10) is 50% to 100% of a thickness (t) of the vibration-reduction adhesive (5).

14. The window structure of the vehicle according to any of the preceding claims, wherein a rigidity recovery rate of the vibration-reduction adhesive (5) for a tension applied in a vehicle width direction is larger than for a tension applied in a vehicle width-length direction and the rigidity recovery rate of the vibration-reduction adhesive (5) for the tension applied in the vehicle width-length direction is larger than for a tension applied in a vehicle length direction.
